(19) 
**Europäisches Patentamt**
**European Patent Office**
**Office européen des brevets**

(11) **EP 4 317 342 A1**

(12) **EUROPEAN PATENT APPLICATION**
published in accordance with Art. 153(4) EPC

(43) Date of publication:
**07.02.2024 Bulletin 2024/06**

(21) Application number: **22778650.6**

(22) Date of filing: **22.03.2022**

(51) International Patent Classification (IPC):
**C09J 7/30** (2018.01)   **C09J 7/00** (2018.01)
**C09J 133/08** (2006.01)

(52) Cooperative Patent Classification (CPC):
**C09J 7/00; C09J 7/24; C09J 7/30; C09J 133/08**

(86) International application number:
**PCT/CN2022/082165**

(87) International publication number:
**WO 2022/206467 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.03.2021 CN 202110334625**

(71) Applicants:
• **Nitto Denko (Shanghai Songjiang) Co., Ltd.**
**Shanghai 201613 (CN)**

• **NITTO DENKO CORPORATION**
**Ibaraki-shi**
**Osaka 567-8680 (JP)**

(72) Inventors:
• **TIAN, Song**
**Shanghai 201613 (CN)**
• **HOU, Meng**
**Shanghai 201613 (CN)**

(74) Representative: **Müller-Boré & Partner**
**Patentanwälte PartG mbB**
**Friedenheimer Brücke 21**
**80639 München (DE)**

(54) **ADHESIVE SHEET**

(57)    The present disclosure provides an adhesive sheet. The adhesive sheet in the present disclosure comprises a substrate layer and an adhesive layer provided on at least one surface of the substrate layer. The surface roughness of the adhesive layer is as follows: Ra: 0.2 to 1.5 $\mu$m, preferably 0.4 to 1.0 $\mu$m; Rz: 2.0 to 15.0 $\mu$m, preferably 3.0 to 10.0 $\mu$m, and Ra/Rz is 3.0 to 30.0, preferably 5.0 to 20.0. The adhesive sheet in the present disclosure has excellent adhesion, flatness, and reusability (reworkability) and is easily peelable after use.

$\frac{1}{\downarrow}$

20

10

FIG. 1

EP 4 317 342 A1

**Description**

**TECHNICAL FIELD**

The present disclosure relates to an adhesive sheet, in particular to an adhesive sheet that is excellent in adhesiveness, flatness, and reusability (reworkability) and is easily peelable after use.

**BACKGROUND**

Typically, an adhesive is in a soft solid (viscoelastic) state in a temperature region around room temperature and has a property of easily bonding to an adherend by pressure. With this property, adhesives are widely used in various fields for bonding, fixing, and other purposes in the form of, e.g., a single-sided or double-sided adhesive sheet with a substrate in which an adhesive layer is provided on either or both surfaces of the substrate.

Before adhering to an adherend, the adhesive sheet is typically expected to have good adhesiveness, flatness, and the like to ensure good adhesion to the adherend. After use, the adhesive sheet is then typically expected to be easily removed without causing adhesive residue contamination. Therefore, it has always been the direction and goal of research in the industry to develop an adhesive sheet capable of ensuring not only excellent adhesiveness and flatness, but also excellent adhesive residue property after peeling.

However, existing adhesive sheets may not address such a problem well. Some adhesive sheets have a poor adhesion property and may not be adhered to adherends for as long as expected, resulting in a short service life. Although other adhesive sheets have excellent adhesion properties, they do not have excellent adhesive residue properties and are prone to adhesive residue contamination after peeling. None of these adhesive sheets may be reused.

**SUMMARY**

Technical Problem

The present disclosure is made to address the above existing problem. An object of the present disclosure is to provide an adhesive sheet that is excellent in adhesiveness, flatness, and reusability (reworkability) and is easily peelable after use.

Solution to Problem

To address the above-mentioned problem, the present inventors have conducted intensive studies and found that the problem is solved by controlling the surface roughness Ra and Rz of the adhesive layer and their ratio Rz/Ra within specific ranges, thereby completing the present disclosure.

That is, the present disclosure is as follows:

[1]. An adhesive sheet, comprising a substrate layer and an adhesive layer disposed on at least one surface of the substrate layer, wherein the adhesive layer has surface roughness as follows: Ra is from 0.2 to 1.5 $\mu$m, preferably from 0.4 to 1.0 $\mu$m; Rz is from 2.0 to 15.0 $\mu$m, preferably from 3.0 to 10.0 $\mu$m; and Rz/Ra is from 3.0 to 30.0, preferably from 5.0 to 20.0.

[2]. The adhesive sheet according to [1], wherein at least one surface of the substrate layer has the surface roughness as follows: Ra is from 0.2 to 1.5 $\mu$m, preferably from 0.4 to 1.0 $\mu$m; Rz is from 2.0 to 15.0 $\mu$m, preferably from 3.0 to 10.0 $\mu$m; and Rz/Ra is from 3.0 to 30.0, preferably from 5.0 to 20.0.

[3]. The adhesive sheet according to [1] or [2], wherein the adhesive sheet further comprises a release film, the release film is provided at least on a side of the adhesive layer opposite to the substrate layer, and the release film has the surface roughness as follows: Ra is from 0.2 to 1.5 $\mu$m, preferably from 0.4 to 1.0 $\mu$m; Rz is from 2.0 to 15.0 $\mu$m, preferably from 3.0 to 10.0 $\mu$m; and Rz/Ra is from 3.0 to 30.0, preferably from 5.0 to 20.0.

[4]. The adhesive sheet according to [1] or [2], wherein a 180° peel adhesive force to a stainless steel plate, measured when the adhesive sheet is adhered to the stainless steel plate and left at 23°C × 50RH% for 0.5 h, is from 0.1 N to 5 N.

[5]. The adhesive sheet according to [1] or [2], wherein a 180° peel adhesive force to a stainless steel plate, measured when the adhesive sheet is adhered to the stainless steel plate and left at 23°C × 50RH% for 24 h, is from 5 N to 12 N.

[6]. The adhesive sheet according to [1] or [2], wherein two pieces of the adhesive sheet are cut out and subjected to alignment bonding at the side of the adhesive layer with a bonding area of 20 mm × 100 mm, either of the two pieces of the adhesive sheet is hanged with 400 g of a weight at one side and left at 23°C × 50RH% for 24 h, and the alignment bonding region has a separation of 80 mm or less.

[7]. The adhesive sheet according to [1] or [2], wherein a soluble portion of the adhesive layer has a weight-average molecular weight of 100,000 or less, preferably 80,000 or less, more preferably 50,000 or less.

[8]. The adhesive sheet according to [1] or [2], wherein the adhesive layer has a gel rate of 45% to 70%.

[9]. The adhesive sheet according to [1] or [2], wherein the adhesive layer has, at 0°C, a storage modulus (G') of $80.0 \times 10^4$ Pa to $300.0 \times 10^4$ Pa, preferably $120.0 \times 10^4$ Pa to $250.0 \times 10^4$ Pa; and a loss modulus (G") of $120.0 \times 10^4$ Pa to $450.0 \times 10^4$ Pa, preferably $200.0 \times 10^4$ Pa to $350.0 \times 10^4$ Pa.

[10]. The adhesive sheet according to [1] or [2], wherein the adhesive layer has, at 23°C, a storage modulus (G') of $8.5 \times 10^4$ Pa to $20 \times 10^4$ Pa, preferably $9.0 \times 10^4$ Pa to $15.0 \times 10^4$ Pa; and a loss modulus (G") of $5.0 \times 10^4$ Pa to $13.0 \times 10^4$ Pa, preferably $6.0 \times 10^4$ Pa to $11.0 \times 10^4$ Pa。

[11]. The adhesive sheet according to [1] or [2], wherein the adhesive layer is formed from an adhesive composition comprising: a base polymer, a tackifying resin, and a crosslinking agent;

preferably, the content of the tackifying resin is from 30 to 50 parts by weight with respect to 100 parts by weight of the base polymer; and the content of the crosslinking agent is from 1 to 5 parts by weight with respect to 100 parts by weight of the base polymer.

[12]. The adhesive sheet according to [11], wherein based on 100 parts by weight of all monomer components of the base polymer, the base polymer comprises: 70 to 95 parts by weight, preferably 80 to 90 parts by weight of a viscous monomer; 5 to 30 parts by weight, preferably 10 to 20 parts by weight of a polar monomer; and 1 to 5 parts by weight, preferably 2 to 4 parts by weight of a copolymerizable monomer,

preferably, the viscous monomer is at least one selected from the group consisting of alkyl (meth)acrylates having an alkyl group with 4 to 20 carbon atoms; the polar monomer is at least one selected from the group consisting of acrylonitrile, methyl methacrylate, vinyl acetate, and styrene; and the copolymerizable monomer is at least one selected from the group consisting of hydroxyl-containing monomers, carboxyl-containing monomers, sulfonyl-containing monomers, phosphate group-containing monomers, epoxy group-containing monomers, isocyanate group-containing monomers, amide group-containing monomers, monomers having a nitrogen atom-containing ring, monomers having a succinimide skeleton, maleimides, itaconimides, aminoalkyl (meth)acrylates, alkoxyalkyl (meth)acrylates, vinyl ethers, and olefins.

[13]. The adhesive sheet according to [11], wherein the tackifying resin is at least one selected from the group consisting of a phenol-based tackifying resin, a terpene-based tackifying resin, a modified terpene-based tackifying resin, a rosin-based tackifying resin, and a hydrocarbon-based tackifying resin;

preferably, the tackifying resin contains a tackifying resin having a hydroxyl value of 70 to 110 mg KOH/g; more preferably, the tackifying resin is a combination of a low softening point tackifying resin with at least one selected from the group consisting of a moderate softening point tackifying resin and a high softening point tackifying resin, the low softening point tackifying resin has a softening point of 5°C to 70°C, the moderate softening point tackifying resin has a softening point of higher than 70°C and lower than 130°C, and the high softening point tackifying resin has a softening point of 130°C to 170°C.

Effects of the Disclosure

The adhesive sheet of the present disclosure has excellent adhesiveness, flatness, and reusability (reworkability) and may be peeled off gently after use without causing damage to adherends or producing adhesive residue contamination. It is excellent in peelability and operability and may be suitable for use in applications such as shielding and protection of various products.

**BRIEF DESCRIPTION OF THE DRAWINGS**

FIG. 1 is a cross-sectional view schematically showing the structure of an adhesive sheet in one embodiment of the present disclosure.

FIG. 2 is a cross-sectional view schematically showing the structure of an adhesive sheet in another embodiment of the present disclosure.

FIG. 3 is a picture schematically showing the measurement of the separation of the alignment bonding region of an adhesive sheet in the examples of the present disclosure.

Descriptions of reference numerals

1: adhesive sheet
10: substrate layer
20: adhesive layer
30: release film

## DETAILED DESCRIPTION

Hereinafter, the contents of the present disclosure will be described in detail. The technical features below are described based on the representative embodiments and specific examples of the present disclosure, but the present disclosure is not limited thereto. It should be noted:
The numerical range represented by "numerical value A to numerical value B" used in the present specification refers to the range including the endpoint values A and B. The numerical range represented by "or more" or "or less" used in the present specification refers to the numerical range including said value. The meaning of "may" used in the present specification includes both the meaning of performing a certain treatment and the meaning of not performing a certain treatment. The term "optional" or "optionally" used in the present specification means the use or nonuse of some substances, components, execution steps, application conditions, and other factors. Names of the units used in the present specification are all names of the international standard units. Unless otherwise stated, the term "a plurality of" used in the present specification refers to the case of having two or two or more kinds.

The phrases such as "some specific/preferred embodiments", "other specific/preferred embodiments","embodiments" and the like referred to in the present specification mean that particular elements (for example, features, structures, properties and/or characteristics) described in relation to this embodiment are included in at least one of the embodiments described herein, and may or may not exist in other embodiments. Additionally, it should be understood that the elements may be combined in any suitable manner into various embodiments.

<Adhesive Sheet>

The adhesive sheet of the present disclosure comprises a substrate layer and an adhesive layer disposed on at least one surface of the substrate layer, wherein the adhesive layer has surface roughness as follows: Ra is from 0.2 to 1.5 $\mu$m, preferably from 0.4 to 1.0 $\mu$m; Rz is from 2.0 to 15.0 $\mu$m, preferably from 3.0 to 10.0 $\mu$m; and Rz/Ra is from 3.0 to 30.0, preferably from 5.0 to 20.0.

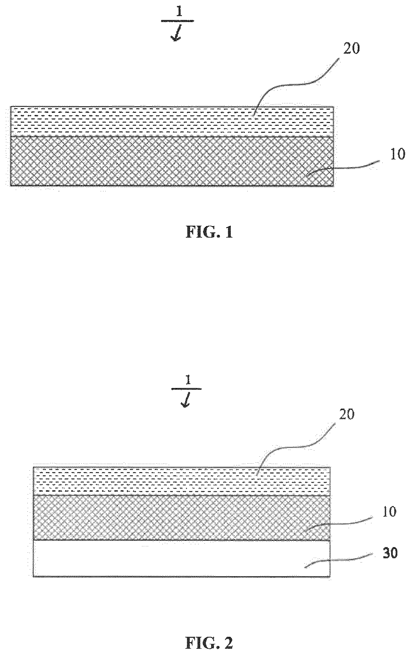

FIG. 1 is a cross-sectional view schematically showing the structure of an adhesive sheet in one embodiment of the present disclosure. As shown in FIG. 1, the adhesive sheet 1 comprises a substrate layer 10 and an adhesive layer 20 disposed on one side of the substrate layer 10. The adhesive layer 20 is preferably disposed on the entire surface of the substrate layer 10.

FIG. 2 is a cross-sectional view schematically showing the structure of an adhesive sheet in another embodiment of the present disclosure. As shown in FIG. 2, the adhesive sheet 1 comprises: a substrate layer 10, an adhesive layer 20 disposed on one side of the substrate layer 10, and a release film 30 disposed on a side of the substrate layer 10 opposite to the adhesive layer 20.

Furthermore, though not shown, the adhesive sheet of the present disclosure may be provided with a release liner on the outer side of the adhesive layer for the purpose of protecting the adhesive surface for a period prior to use.

The concept of the adhesive sheet described in the present specification may include an object referred to as an adhesive tape, an adhesive label, an adhesive film, etc. It should be noted that the adhesive sheet disclosed herein may be a single sheet or an adhesive sheet further processed into various shapes. In some embodiments, the adhesive sheet of the present disclosure may be provided in a strip shape. In the present disclosure, the adhesive sheet is preferably used in the form of a single-sheet roll shape.

The adhesive sheet of the present disclosure has the following characteristics: the adhesive layer has the surface roughness as follows: Ra is from 0.2 to 1.5 $\mu$m, preferably from 0.4 to 1.0 $\mu$m; Rz is from 2.0 to 15.0 $\mu$m, preferably from 3.0 to 10.0 $\mu$m; and Rz/Ra is from 3.0 to 30.0, preferably from 5.0 to 20.0. The surface roughness Ra and Rz are both measured with reference to the test method of JIS-B0601-1994.

The surface roughness may reduce the effective contact area between the adhesive layer and the surface to be adhered, which is manifested as a decrease in adhesion. The present disclosure has found that by extending the contact time or increasing the pressure, the surface roughness of the adhesive layer decreases gradually and the effective contact area increases, which is manifested as a gradual recovery of the adhesion to its original level.

In the present disclosure, by making the surface roughness of the adhesive layer satisfy the above specific ranges, the influence of the adhesive sheet on flatness of the surface of the adherend may be suppressed, so that the adhesive sheet has good reusability (reworkability) and is easily peelable after use. In the present disclosure, if the adhesive layer has Ra of less than 0.2 $\mu$m and/or Rz of less than 2.0 $\mu$m and/or Rz/Ra of less than 3.0, the initial adhesion force will be too high, causing uneven adherence, such that the adhesive sheet may not be peeled off again and the reworkability may not be realized. On the other hand, if the adhesive layer has Ra of greater than 1.5 μm and/or Rz of greater than 15.0 μm and/or Rz/Ra of greater than 30.0, the adhesion is not increased adequately over time and cracking or peeling easily occurs.

In some embodiments of the present disclosure, at least one surface of the substrate layer also has surface roughness in the same ranges as that of the adhesive layer, that is, the surface roughness of at least one surface of the substrate layer is as follows: Ra is from 0.2 to 1.5 μm, preferably from 0.4 to 1.0 μm; Rz is from 2.0 to 15.0 μm, preferably from 3.0 to 10.0 μm; and Rz/Ra is from 3.0 to 30.0, preferably from 5.0 to 20.0.

In other embodiments of the present disclosure, the adhesive sheet further comprises a release film. The release film is provided at least on a side of the adhesive layer opposite to the substrate layer. The release film also has surface roughness in the same ranges as that of the adhesive layer, that is, the surface roughness of the release film is as follows: Ra is from 0.2 to 1.5 μm, preferably from 0.4 to 1.0 μm; Rz is from 2.0 to 15.0 μm, preferably from 3.0 to 10.0 μm; and Rz/Ra is from 3.0 to 30.0, preferably from 5.0 to 20.0.

In the present disclosure, by making the surface roughness of at least one surface of the substrate layer and/or the release film satisfy the above specific ranges, the influence of the adhesive sheet on flatness of the surface of the adherend may be suppressed, so that the adhesive sheet has good reusability (reworkability) and is easily peelable after use. Moreover, if the surface roughness of at least one surface of the substrate layer and/or the release film is not within the above range of the present disclosure, the same adverse effects described above as in the case where the surface roughness of the adhesive layer is not within the range of the present disclosure will occur.

In the present disclosure, by selecting a substrate layer and/or release film with the above surface roughness, when the substrate layer and the adhesive layer as well as an optional release film are combined together, the surface roughness is transferred from the substrate layer and/or release film to the adhesive layer, whereby the adhesive layer also has the surface roughness.

In some preferred embodiments, the 180° peel adhesive force to the stainless steel plate, measured when the adhesive sheet of the present disclosure is adhered to a stainless steel plate and left at 23°C × 50RH% for 0.5 h, is from 0.1 N to 5 N, preferably from 0.3 N to 3 N. In other preferred embodiments, the 180° peel adhesive force to the stainless steel plate, measured when the adhesive sheet of the present disclosure is adhered to a stainless steel plate and left at 23°C × 50RH% for 24 h, is from 5 N to 12 N, preferably from 6.0 N to 10 N.

When the above adhesive force of the adhesive sheet of the present disclosure falls within the above range, excellent adhesiveness may be achieved. If the above adhesive force is less than 0.1 N when the adhesive sheet of the present disclosure is adhered to the stainless steel plate and left at 23°C × 50RH% for 0.5 h and/or the above adhesive force is less than 5 N when the adhesive sheet of the present disclosure is adhered to the stainless steel plate and left at 23°C × 50RH% for 24 h, the adhesive sheet is prone to peeling off due to inadequate adhesiveness. Besides, if the above adhesive force is greater than 5 N when the adhesive sheet of the present disclosure is adhered to the stainless steel plate and left at 23°C × 50RH% for 0.5 h and/or the above adhesive force is greater than 12 N when the adhesive sheet of the present disclosure is adhered to the stainless steel plate and left at 23°C × 50RH% for 24 h, it is difficult to peel off the adhesive sheet from the adherend, the peeling operability is poor, and adverse effects such as adhesive residue contamination easily occur. The above adhesive force may be determined, for example, by the method described in the following examples.

In some preferred embodiments, the adherend preferably includes SUS430BA plate, SUS304 plate, SUS304BA plate, etc.

In some preferred embodiments, two pieces of the adhesive sheet of the present disclosure are cut out and subjected to alignment bonding at the side of the adhesive layer with a bonding area of 20 mm × 100 mm, either of the two pieces of the adhesive sheet is hanged with 400 g of a weight at one side and left at 23°C × 50RH% for 24 h, and the alignment bonding region has a separation of 80 mm or less, preferably 50 mm or less. The detailed method and steps of measuring the separation are shown in the examples. By imparting the separation falling within the above range to the adhesive sheet of the present disclosure, excellent adhesiveness may be achieved.

The thickness of the adhesive sheet of the present disclosure is not particularly limited. In some preferred embodiments, the thickness of the adhesive sheet is preferably from 0.05 to 0.4 mm, more preferably from 0.07 to 0.3 mm. By setting the thickness of the adhesive sheet to the above range, good adhesiveness, flatness, and reusability (reworkability) may be achieved.

[Substrate Layer]

The material for the substrate layer constituting the adhesive sheet disclosed herein is not particularly limited, and may be selected appropriately according to the purpose of use or the manner of use or the like of this adhesive sheet. Non-limiting examples of usable substrate layers may include fluorine-containing resin films comprising a fluorine-containing resin, e.g., polytetrafluoroethylene (PTFE), polyfluoroalkoxy alkane (PFA), a fluorinated ethylene propylene copolymer (FEP), an ethylene tetrafluoroethylene copolymer (ETFE) or polyvinylidene difluoride (PVdF) as a main component, polyolefin films comprising a polyolefin, e.g., polypropylene or an ethylene-propylene copolymer as a main component, polyester films comprising a polyester, e.g., polyethylene glycol terephthalate or polybutylene terephthalate as a main component, polyvinyl chloride films comprising polyvinyl chloride as a main component, films comprising casting polypropylene as a main component, plastic films such as thermoplastic polyurethane films; foam sheets formed by foams such as polyurethane foams, polyethylene foams, and polychloroprene foams; woven and nonwoven fabrics obtained from various fibrous matters (which may be natural fibers such as hemp and cotton, synthetic fibers such as polyester and vinylon, semi-synthetic fibers such as acetate, etc.) alone or by blending; paper such as Japanese paper, high-quality paper, kraft paper, and crepe paper; and metal foils such as aluminum foils and copper foils. It may also be a substrate formed by compounding them. Examples of such composite substrates may include substrates with the structures formed by laminating metal foils with the above plastic films, and plastic substrates reinforced by inorganic fibers such as glass cloth.

The surface of the substrate layer of the present disclosure may be subjected to any surface treatment in order to improve its adhesiveness to the adjacent layers and retention, etc. The above surface treatment may include, for example, chemical or physical treatments such as chromate treatment, ozone exposure, flame exposure, high-voltage electric shock exposure, and ionized radiation treatment, and coating treatment.

The thickness of the substrate layer of the present disclosure may be set to any appropriate thickness depending on the desired strength or flexibility and the purpose of use, etc. The thickness of the substrate layer is preferably from 10 to 200 $\mu$m, more preferably from 20 to 100 $\mu$m.

In the present disclosure, at least one surface of the substrate layer has surface roughness in the same ranges as that of the adhesive layer. The specific ranges of the surface roughness have been illustrated above.

[Adhesive Layer]

In the present disclosure, the adhesive layer has the surface roughness in the above ranges.

In a preferred embodiment, a soluble portion of the adhesive layer has a weight-average molecular weight of 100,000 or less, preferably 80,000 or less, more preferably 50,000 or less. When the weight-average molecular weight of the soluble portion of the adhesive layer is greater than 100,000, adhesive residues tend to occur when peeling due to insufficient cohesive force of polymer.

The weight-average molecular weight (Mw) refers to a value obtained by gel permeation chromatography (GPC) in terms of standard polystyrene. The GPC device may be, for example, "HLC-8320GPC" (model name, column: TSKgelGMH-H(S), manufactured by Tosoh Corporation).

In a preferred embodiment, the adhesive layer has a gel rate of 45% to 70%, preferably 50% to 70%, more preferably 55% to 65%. When the gel rate is within the above range, an excellent adhesive property may be obtained. The gel rate may be adjusted, for example, according to the composition and molecular weight of the base polymer, the presence or absence of the crosslinking agent and the type and amount thereof, etc.

In a preferred embodiment, the adhesive layer has, at 0°C, a storage modulus (G') of $80.0 \times 10^4$ Pa to $300.0 \times 10^4$ Pa, preferably $120.0 \times 10^4$ Pa to $250.0 \times 10^4$ Pa; and a loss modulus (G") of $120.0 \times 10^4$ Pa to $450.0 \times 10^4$ Pa, preferably $200.0 \times 10^4$ Pa to $350 \times 10^4$ Pa.

In another preferred embodiment, the adhesive layer has, at 23°C, a storage modulus (G') of $8.5 \times 10^4$ Pa to $20 \times 10^4$ Pa, preferably $9.0 \times 10^4$ Pa to $15.0 \times 10^4$ Pa; and a loss modulus (G") of $5.0 \times 10^4$ Pa to $13.0 \times 10^4$ Pa, preferably $6.0 \times 10^4$ Pa to $11.0 \times 10^4$ Pa.

When the storage modulus and the loss modulus are within the above ranges, the contamination of the surface of an adherend caused by adherence to this adherend is sufficiently low and an adhesive sheet with excellent conformability to unevenness of the adherend may be obtained.

The storage modulus and the loss modulus of the adhesive layer may be controlled, for example, by the type of the base polymer (such as the glass transition temperature, the molecular weight, and the like of the base polymer) in the adhesive composition constituting the adhesive layer. The glass transition temperature of the base polymer in the adhesive composition constituting the adhesive layer may be regulated, for example, by appropriately selecting the monomer constituting this base polymer.

In the present disclosure, the adhesive layer is formed from an adhesive composition. The adhesive composition comprises a base polymer, a tackifying resin, and a crosslinking agent. The adhesive composition may comprise, for example, an acrylic polymer, a rubber-based polymer, a polyester-based polymer, a carbamate-based polymer, a polyether-based polymer, a polyamide-based polymer, or a fluorine-based polymer as a base polymer (i.e., a component accounting for 50 wt% or more of the polymer component). Among them, the adhesive layer is preferably a layer formed from an adhesive composition containing an acrylic polymer. The form of the adhesive composition is not particularly limited and may be, for example, adhesive compositions in various forms such as a water-dispersible type, a solvent type, a hot-melt type, and an active energy ray curing type (e.g., photocuring type).

Hereinafter, the components of the adhesive composition of the present disclosure will be described in detail.

(Base Polymer)

The adhesive composition of the present disclosure comprises a base polymer. Preferably, the adhesive composition comprises an acrylic polymer as a base polymer.

The content of the base polymer is not particularly limited, and is preferably 60% by mass or more, more preferably 70% by mass or more, further preferably 80% by mass or more with respect to the total content (total weight, 100% by mass) of the adhesive composition from the standpoint of achieving sufficient adhesive reliability. By adjusting the content of the base polymer in the adhesive composition to the above range, it is possible to provide an adhesive composition that is more excellent in stress relaxation and durability and excellent in adhesiveness to the adherend.

The base polymer involved in the technology disclosed herein is preferably a polymer of a monomer component comprising a viscous monomer as a main monomer, a copolymerizable monomer that is copolymerizable with the above main monomer, and a polar monomer. Here the main monomer refers to the main component in the monomer component constituting the base polymer, i.e., more than 50 wt% of the component included in this monomer component.

((Viscous Monomer))

In a preferred embodiment, the viscous monomer includes alkyl (meth)acrylate. In the present specification, the term "alkyl (meth)acrylate" refers to alkyl acrylate and/or alkyl methacrylate.

Preferably, the viscous monomer is at least one selected from the group consisting of alkyl (meth)acrylates having an alkyl group with 4 to 20 carbon atoms. Specific examples of the alkyl (meth)acrylates having an alkyl group with 4 to 20 carbon atoms are not particularly limited, and may include: n-butyl (meth)acrylate, isobutyl (meth)acrylate, sec-butyl (meth)acrylate, tert-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, myristyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate. Among them, n-butyl acrylate (BA) and 2-ethylhexyl acrylate (2-EHA) are preferred. Alkyl (meth)acrylate may be used alone or in combination of two or more.

The content of the viscous monomer is from 70 to 95 parts by weight, preferably from 80 to 90 parts by weight based on 100 parts by weight of all monomer components of the base polymer. When the content of the viscous monomer is within the above range, excellent adhesiveness may be achieved.

((Polar Monomer))

As polar monomers, polar monomers that may form polymers having a higher glass transition point may be suitable used. The polar monomer is useful for improving the cohesive strength of the adhesive layer. The polar monomer may be used alone or in combination of two or more.

Non-limiting specific examples of the polar monomer may include acrylonitrile (AN), methyl methacrylate (MMA), vinyl acetate (VAc), styrene (St), and the like.

The content of the polar monomer is from 5 to 30 parts by weight, preferably from 10 to 20 parts by weight based on 100 parts by weight of all monomer components of the base polymer. When the content of the polar monomer is within the above range, the cohesive strength and heat resistance may be further improved.

((Copolymerizable Monomer))

Non-limiting specific examples of the copolymerizable monomer may include hydroxyl-containing monomers (monomers containing a hydroxyl group), carboxyl-containing monomers (monomers containing a carboxyl group), sulfonyl-containing monomers, phosphate group-containing monomers, epoxy group-containing monomers, isocyanate group-containing monomers, amide group-containing monomers, monomers having a nitrogen atom-containing ring, monomers having a succinimide skeleton, maleimides, itaconimides, aminoalkyl (meth)acrylates, alkoxyalkyl (meth)acrylates, vinyl ethers, olefins, and the like. Among them, at least one selected from the group consisting of hydroxyl-containing monomers and carboxyl-containing monomers is preferred.

The content of the copolymerizable monomer is from 1 to 5 parts by weight, preferably from 2 to 4 parts by weight based on 100 parts by weight of all monomer components of the base polymer. When the content of the copolymerizable monomer is within the above range, the cohesive force of the adhesive may be prevented from becoming too high and the adhesiveness may be improved.

The hydroxyl-containing monomer is a monomer having at least one hydroxyl group in its molecule. In the case where the monomer component for constituting the base polymer includes a hydroxyl-containing monomer, that is, the base polymer includes a monomer unit derived from a hydroxyl-containing monomer, a secondary bond such as a hydrogen bond will be formed with an adherend, so the cohesive force of the base polymer (appropriately an acrylic polymer) is improved, which may more efficiently suppress the change in adhesive force over time, and the adhesive residues on the adherend are fewer after peeling and the aggregation is higher. Furthermore, by containing a hydroxyl-containing monomer in the raw material monomer of the base polymer, it may be crosslinked effectively with a crosslinking agent when used, and may fully exhibit the effect as an adhesive. Additionally, breakage of the adherend may also be effectively prevented during the peeling operation. The base polymer in this embodiment may contain one hydroxyl-containing monomer or two or more hydroxyl-containing monomers.

Specific examples of the hydroxyl-containing monomer may include: hydroxyalkyl (meth)acrylates such as 2-hydroxyethyl (meth)acrylate, 2-hydroxypropyl (meth)acrylate, 2-hydroxybutyl (meth)acrylate, 3-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, and (4-hydroxymethylcyclohexyl)methyl (meth)acrylate.

The content of the hydroxyl-containing monomer is not particularly limited. For example, the content of the hydroxyl-containing monomer is from 1 to 5 parts by weight, preferably 2 to 4 parts by weight based on 100 parts by weight of all monomer components of the base polymer. When the content of the hydroxyl-containing monomer is within the above range, a secondary bond such as a hydrogen bond will be formed with an adherend, so the cohesive force of the base polymer (appropriately an acrylic polymer) is improved, which may more efficiently suppress the change in adhesive force over time, and the adhesive residues on the adherend are fewer after peeling and the aggregation is higher. When the content of the hydroxyl-containing monomer is less than 1 part by weight, adequate adhesiveness may not be acquired. When the content of the hydroxyl-containing monomer is greater than 5 parts by weight, the adhesive force becomes too large, and there is a concern that adhesion easily occurs. Besides, there is a concern that breakage of the adherend easily occurs during the peeling operation.

The carboxyl-containing monomer is a monomer having at least one carboxyl group in its molecule. By containing a carboxyl-containing monomer in the raw material monomer of the base polymer, a secondary bond such as a hydrogen bond will be formed with an adherend, so the cohesive force of the base polymer (appropriately an acrylic polymer) is improved, which may more efficiently suppress the change in adhesive force over time, and the adhesive residues on the adherend are fewer after peeling and the aggregation is higher. Additionally, by containing a carboxyl-containing monomer in the raw material monomer of the base polymer, it may be crosslinked effectively with a crosslinking agent when used, and may fully exhibit the effect as an adhesive. Furthermore, breakage of the adherend may also be effectively prevented during the peeling operation.

Specific examples of the carboxyl-containing monomer may include: acrylic acid, methacrylic acid, carboxyethyl (meth)acrylate, carboxypentyl (meth)acrylate, crotonic acid, isocrotonic acid, fumaric acid, itaconic acid, maleic acid, citraconic acid, maleic anhydride, itaconic anhydride, and the like. Among them, acrylic acid and methacrylic acid are preferred. The above carboxyl-containing monomers may be used alone or in combination of two or more.

The content of the carboxyl-containing monomer is not particularly limited. For example, the content of the carboxyl-containing monomer is preferably from 1 to 5 parts by weight, more preferably 2 to 4 parts by weight based on 100 parts by weight of all monomer components of the base polymer. When the content of the carboxyl-containing monomer is within the above range, a secondary bond such as a hydrogen bond will be formed with an adherend, so the cohesive force of the base polymer (appropriately an acrylic polymer) is improved, which may more efficiently suppress the change in adhesive force over time, and the adhesive residues on the adherend are fewer after peeling and the aggregation is higher. When the content of the carboxyl-containing monomer is greater than 5 parts by weight, the adhesive force becomes too large, and there is a concern that adhesion easily occurs. Besides, there is a concern that breakage of the adherend easily occurs during the peeling operation. When the content of the carboxyl-containing monomer is less than 1 part by weight, adequate adhesiveness may not be acquired.

Examples of the sulfonyl-containing monomer may include styrenesulfonic acid, allylsulfonic acid, sodium vinylsulfonate, 2-(meth)acrylamido-2-methylpropanesulfonic acid, (meth)acrylamidopropanesulfonic acid, sulfopropyl (meth)acrylate, (meth)acryloyloxynaphthalenesulfonic acid, and the like.

Examples of the phosphate group-containing monomer may include 2-hydroxyethyl acryloyl phosphate and the like.

Examples of the epoxy group-containing monomer may include epoxy group-containing acrylates such as glycidyl (meth)acrylate and 2-ethyl glycidyl (meth)acrylate, allyl glycidyl ethers glycidyl (meth)acrylates, and the like.

Examples of the isocyanate group-containing monomer may include 2-isocyanatoethyl (meth)acrylate and the like.

Examples of the amide group-containing monomer may include (meth)acrylamide; N,N-dialkyl(meth)acrylamides such as N,N-dimethyl(meth)acrylamide, N,N-diethyl(meth)acrylamide, N,N-dipropyl(meth)acrylamide, N,N-diisopropyl(meth)acrylamide, N,N-di(n-butyl)(meth)acrylamide, and N,N-di(tert-butyl)(meth)acrylamide; N-alkyl(meth)acrylamides such as N-ethyl(meth)acrylamide, N-isopropyl(meth)acrylamide, N-butyl(meth)acrylamide, and N-n-butyl(meth)acrylamide; N-vinylcarboxylic amides such as N-vinylacetamide; N,N-dimethylaminopropyl(meth)acrylamide, hydroxyethylacrylamide, N-hydroxymethyl(meth)acrylamide, N-hydroxyethyl(meth)acrylamide, N-hydroxymethylpropane(meth)acrylamide, N-methoxymethyl(meth)aciylamide, N-methoxyethyl(meth)acrylamide, N-butoxymethyl(meth)acrylamide, N-(meth)acryloylmorpholine, and the like.

Examples of the monomer having a nitrogen atom-containing ring may include N-vinyl-2-pyrrolidone, N-methylvinylpyrrolidone, N-vinylpyridine, N-vinylpiperidone, N-vinylpyrimidine, N-vinylpiperazine, N-vinylpyrazine , N-vinylpyrrole, N-vinylimidazole, N-vinyloxazole, N-(meth)acryloyl-2-pyrrolidone, N-(meth)acryloylpiperidine, N-(methyl)acryloylpyrrolidine, N-vinylmorpholine, N-vinyl-3-morpholinone, N-vinyl-2-caprolactam, N-vinyl-1,3-oxazin-2-one, N-vinyl-3,5-morpholinedione, N-vinylpyrazole, N-vinylisoxazole, N-vinylthiazole, N-vinylisothiazole, N-vinylpyridazine, and the like.

Examples of the monomer having a succinimide skeleton may include N-(meth)acryloyloxymethylene succinimide, N-(meth)acryloyl-6-oxyhexamethylene succinimide, and N-(meth)acryloyl-8-oxyhexamethylene succinimide, and the like.

Examples of the maleimides may include N-cyclohexylmaleimide, N-isopropylmaleimide, N-laurylmaleimide, N-phenylmaleimide, and the like.

Examples of the itaconimides may include N-methylitaconimide, N-ethylitaconimide, N-butylitaconimide, N-octylitaconimide, N-2-ethylhexylitaconimine, N-cyclohexylitaconimide, N-laurylitaconimide, and the like.

Examples of the aminoalkyl (meth)acrylates may include aminoethyl(meth)acrylate, N,N-dimethylaminoethyl(meth)acrylate, N,N-diethylaminoethyl(meth)acrylate, tert-butylaminoethyl(meth)acrylate, and the like.

Examples of the alkoxyalkyl (meth)acrylates may include methoxyethyl(meth)acrylate, ethoxyethyl(meth)acrylate, propoxyethyl(meth)acrylate, butoxyethyl(meth)acrylate, ethoxypropyl(meth)acrylate, and the like.

Examples of the vinyl ethers may include vinyl alkyl ethers such as methyl vinyl ether, ethyl vinyl ether, and the like.

Examples of the olefins may include ethylene, butadiene, isoprene, isobutylene, and the like.

The method for obtaining the base polymer is not particularly limited, and various known polymerization methods such as solution polymerization, emulsion polymerization, bulk polymerization, suspension polymerization, and photopolymerization may be used appropriately. For example, it may be preferable to use solution polymerization. As the method for supplying monomers during solution polymerization, a batch feeding method of supplying all raw material monomers at one time, a continuous feeding (dropping) method, a separate feeding (dropping) method, and the like may be adopted properly. The polymerization temperature for the solution polymerization may be properly selected depending on the types of the monomer and the solvent used, the type of the polymerization initiator, etc. For example, the polymerization temperature may be set to about 20°C to about 170°C (typically about 40°C to about 140°C).

The solvent (polymerization solvent) used in the solution polymerization may be selected appropriately from conventionally known organic solvents. For example, any one solvent or a mixture of two or more solvents selected from the group consisting of aromatic compounds (typically aromatic hydrocarbons) such as toluene; acetates such as ethyl acetate; aliphatic or alicyclic hydrocarbons such as hexane and cyclohexane; halogenated alkanes such as 1,2-dichloroethane; lower alcohols (such as monohydric alcohols with 1 to 4 carbon atoms) such as isopropanol; ethers such as tert-butyl methyl ether; ketones such as methyl ethyl ketone, etc. may be used.

The initiator used for polymerization may be selected appropriately from conventionally known polymerization initiators depending upon the type of polymerization method. For example, it may be preferable to use one or two or more of azo-based polymerization initiators such as 2,2'-azobisisobutyronitrile (AIBN). Other examples of the polymerization initiator may include persulfates such as potassium persulfate; peroxide-based initiators such as benzoyl peroxide and hydrogen peroxide; substituted ethane initiators such as phenyl-substituted ethane; and aromatic carbonyl compounds, etc. Yet other examples of the polymerization initiator may include redox-based initiators obtained by combining peroxides and reducing agents. Such polymerization initiators may be used alone or in combination of two or more. The amount of the polymerization initiator is the commonly-used amount, for example, it may be selected from the range of from about 0.005 parts by weight to about 1 part by weight (typically from about 0.01 part by weight to about 1 part by weight) with respect to 100 parts by weight of all monomer components.

(Tackifying Resin)

The adhesive composition further comprises a tackifying resin. By using the tackifying resin, the adhesive force may be increased.

As the tackifying resin, at least one selected from the group consisting of a phenol-based tackifying resin, a terpene-based tackifying resin, a modified terpene-based tackifying resin, a rosin-based tackifying resin, and a hydrocarbon-based tackifying resin may be used. Such a tackifying resin may be used alone or in combination of two or more.

Examples of the phenol-based tackifying resin may include terpene phenolic resins, hydrogenated terpene phenolic resins, alkyl phenolic resins, and rosin phenolic resins, and the like.

Terpene phenolic resin refers to a polymer containing terpene residues and phenolic residues, and it is a concept covering both the copolymers of terpenes and phenolic compounds (terpene-phenol copolymer resins) and the resins obtained by phenol-modifying terpene-based homopolymers or copolymers (phenol-modified terpene resins). Suitable examples of terpenes constituting such terpene phenolic resins may include monoterpenes such as α-pinene, β-pinene, and limonene (including d-configuration, 1-configuration, and d/1-configuration (dipentene)). Hydrogenated terpene phenolic resin refers to the hydrogenated terpene phenolic resin with a structure obtained by hydrogenating such kinds of terpene phenolic resins.

The alkyl phenolic resin is a resin obtained from alkylphenol and formaldehyde (oily phenolic resin). Examples of the alkyl phenolic resin may include a novolac type and a resol type.

Examples of the terpene-based tackifying resin may include polymers of terpenes (typically monoterpenes) such as α-pinene, β-pinene, d-limonene, 1-limonene, and dipentene. It may be a homopolymer of one terpene or a copolymer of two or more terpenes. Examples of the homopolymer of one terpene may include α-pinene polymers, β-pinene polymers, dipentene polymers, and the like.

Examples of the modified terpene-based tackifying resins may include those obtained by modifying the above terpene-based tackifying resins. To be specific, styrene-modified terpene resins, hydrogenated terpene resins, and the like may be illustrated, for example.

The concept of the rosin-based tackifying resin involves both rosin-based resins and rosin-derived resins.

Examples of the rosins include: unmodified rosins (raw rosins) such as gum rosin, wood rosin, and tall oil rosin; and modified rosins (hydrogenated rosins, disproportionated rosins, polymerized rosins, other chemically modified rosins, etc.) obtained by modifying these unmodified rosins through hydrogenation, disproportionation, polymerization, etc.

Rosin-derived resins are typically derivatives of the aforementioned rosins. The concept of the so-called rosin-based tackifying resin here involves derivatives of unmodified rosins and derivatives of modified rosins (including hydrogenated rosins, disproportionated rosins, and polymerized rosins).

Examples of the rosin-derived resin may include: for example, rosin esters such as unmodified rosin esters as esters of unmodified rosins and alcohols and modified rosin esters as esters of modified rosins and alcohols; for example, unsaturated fatty acid-modified rosins obtained by modifying rosins with unsaturated fatty acids; for example, unsaturated fatty acid-modified rosin esters obtained by modifying rosin esters with unsaturated fatty acids; for example, rosin alcohols obtained by reducing the carboxyl groups of the rosins or various kinds of rosin derivatives (including rosin esters, unsaturated fatty acid-modified rosins, and unsaturated fatty acid-modified rosin esters) described above; for example, metal salts of the rosins or various kinds of rosin derivatives described above, and the like.

Specific examples of the rosin esters may include methyl esters, triethylene glycol esters, glycerin esters, pentaerythritol esters, and the like of unmodified rosins or modified rosins (hydrogenated rosins, disproportionated rosins, polymerized rosins, etc.).

Examples of the hydrocarbon-based tackifying resin may include various hydrocarbon-based resins such as aliphatic hydrocarbon resins, aromatic hydrocarbon resins, aliphatic cyclic hydrocarbon resins, aliphatic petroleum resins (e.g., C8 to C10 petroleum resins), aliphatic-aromatic petroleum resins (styrene-olefin-based copolymers, etc.), aliphatic·alicyclic petroleum resins, hydrogenated hydrocarbon resins, coumarone-based resins, and coumarone-indene-based resins.

Examples of the aliphatic hydrocarbon resins may include polymers of one or two or more of aliphatic hydrocarbons selected from the group consisting of olefins and dienes having about 4 or 5 carbon atoms. Examples of the above olefins may include 1-butene, isobutylene, 1-pentene, and the like. Examples of the above dienes may include butadiene, 1,3-pentadiene, isoprene, and the like.

Examples of the aromatic hydrocarbon resins may include polymers of vinyl-containing aromatic hydrocarbons having about 8 to 10 carbon atoms (styrene, vinyltoluene, α-methylstyrene, indene, methylindene, etc.). Examples of the aliphatic cyclic hydrocarbon resins may include alicyclic hydrocarbon resins obtained by subjecting so-called "C4 petroleum fractions" or "C5 petroleum fractions" to cyclodimerization and then to polymerization; polymers of cyclodiene compounds (cyclopentadiene, dicyclopentadiene, ethylidene norbornene, dipentene, etc.) or hydrides thereof; alicyclic hydrocarbon resins obtained by hydrogenating the aromatic rings of aromatic hydrocarbon resins or aliphatic/aromatic petroleum resins; and the like.

In a preferred embodiment, it is preferable that the adhesive composition comprises a tackifying resin with a hydroxyl value of 70 to 110 mg KOH/g. With the adoption of such resins with a high hydroxyl value, the characteristics of the adhesive, such as adhesive force, will not be impaired and good high-temperature resistance may be achieved. From the standpoint of better compatibility with the base polymer and the like, the hydroxyl value of the tackifying resin is preferably from 80 to 110 mgKOH/g. As the above hydroxyl value, the value determined by the potentiometric titration specified in JIS K0070: 1992 may be used.

In a preferred embodiment, from the standpoint of improving the cohesive force, the tackifying resin is a combination of a low softening point tackifying resin with at least one selected from the group consisting of a moderate softening point tackifying resin and a high softening point tackifying resin, where the low softening point tackifying resin has a softening point of 5°C to 70°C, the moderate softening point tackifying resin has a softening point of higher than 70°C and lower than 130°C, and the high softening point tackifying resin has a softening point of 130°C to 170°C. The softening point of the tackifying resin may be determined by the softening point test method (ring and ball method) specified in JIS K 5902 and JIS K 2207.

In the present disclosure, "a combination of a low softening point tackifying resin with at least one selected from the group consisting of a moderate softening point tackifying resin and a high softening point tackifying resin" refers to: a combination of a low softening point tackifying resin with a moderate softening point tackifying resin, a combination of a low softening point tackifying resin with a high softening point tackifying resin, and a combination of a low softening point tackifying resin, a moderate softening point tackifying resin, and a high softening point tackifying resin.

In the present disclosure, examples of the low softening point tackifying resin are: rosin methyl esters, liquid terpene resins, etc.; examples of the moderate softening point tackifying resin are: rosin pentaerythritol esters (with a number-average molecular weight of from 1800 to 2500), terpene resins (with a number-average molecular weight of from 1800 to 2500), etc.; examples of the high softening point tackifying resin are: rosin pentaerythritol esters (with a number-average molecular weight of greater than 2500), terpene resins (with a number-average molecular weight of greater than 2500), rosin terpene phenolic resins, etc.

In a preferred embodiment, the content of the tackifying resin is from 30 to 50 parts by weight with respect to 100 parts by weight of the base polymer; preferably, the low softening point tackifying resin is from 3 to 15 parts by weight, the moderate softening point tackifying resin is from 15 to 35 parts by weight, and the high softening point tackifying resin is from 7 to 20 parts by weight; more preferably, the low softening point tackifying resin is from 3 to 10 parts by weight, the moderate softening point tackifying resin is from 20 to 27 parts by weight, and the high softening point tackifying resin is from 7 to 13 parts by weight.

(Crosslinking Agent)

In the present disclosure, in order to adjust the cohesive force and the like, the adhesive composition comprises a crosslinking agent. The crosslinking agent may be a commonly used crosslinking agent, and may include, for example, epoxy-based crosslinking agents, isocyanate-based crosslinking agents, melamine-based crosslinking agents, aziridine-based crosslinking agents, and metal chelate-based crosslinking agents. By using these crosslinking agents, a moderate crosslinking reaction can be generated to fully improve the cohesion and ensure good adhesiveness, and breakage of the adherend may be effectively prevented during the peeling operation. These crosslinking agents may be used alone or in combination of two or more.

As the epoxy-based crosslinking agent, compounds having two or more epoxy groups in one molecule may be used without particular limitations. Epoxy-based crosslinking agents having 3 to 5 epoxy groups (the epoxy functionality is 3 to 5) in one molecule are preferred. The epoxy-based crosslinking agents may be used alone or in combination of two or more.

Specific examples of the epoxy-based crosslinking agent are not particularly limited, and may include: bisphenol A, epichlorohydrin-type epoxy-based resins, ethylene glycidyl ethers, N,N,N',N'-tetraglycidyl-m-xylylenediamine, 1,3-bis(N,N-diglycidylaminomethyl)cyclohexane, 1,6-hexanediol diglycidyl ethers, polyethylene glycol diglycidyl ethers, polyglycerol polyglycidyl ethers, and the like. Examples of commercially available products of epoxy-based crosslinking agents may include "TETRAD-C" and "TETRAD-X" (trade names, manufactured by Mitsubishi Gas Chemical Company, Inc.), "EPICLON CR-5L" (trade name, manufactured by DIC Corporation), "DENACOL EX-512" (trade name, manufactured by Nagase Chemicals, Ltd.), and "TEPIC-G" (trade name, manufactured by Nissan Chemical Industries, Ltd.).

The amount of the epoxy-based crosslinking agent is not particularly limited. For example, it is preferably from 1 to 5 parts by weight, more preferably from 2 to 4 parts by weight based on 100 parts by weight of the base polymer.

In the embodiments involving the epoxy-based crosslinking agent, the epoxy equivalent of the epoxy-based crosslinking agent is preferably from 80 to 120 g/eq.

As the isocyanate-based crosslinking agent, it may be preferable to use polyfunctional isocyanate (which refers to a compound having an average of two or more isocyanate groups per molecule, including compounds having an isocyanurate structure). The isocyanate-based crosslinking agents may be used alone or in combination of two or more.

Examples of the polyfunctional isocyanate may include aliphatic polyisocyanates, alicyclic polyisocyanates, aromatic polyisocyanates, and the like.

Specific examples of the aliphatic polyisocyanates may include: 1,2-ethylene diisocyanate; butanediyl isocyanates such as 1,2-butanediyl isocyanate, 1,3-butanediyl isocyanate, and 1,4-butanediyl isocyanate; hexanediyl isocyanates such as 1,2-hexanediyl isocyanate, 1,3-hexanediyl isocyanate, 1,4-hexanediyl isocyanate, 1,5-hexanediyl isocyanate, 1,6-hexanediyl isocyanate, and 2,5-hexanediyl isocyanate; 2-methyl-1,5-pentanediyl isocyanate, 3-methyl-1,5-pentanediyl isocyanate, lysine diisocyanate, and the like.

Specific examples of the alicyclic polyisocyanates may include: isophorone diisocyanate; cyclohexyl diisocyanates such as 1,2-cyclohexyl diisocyanate, 1,3-cyclohexyl diisocyanate, and 1,4-cyclohexyl diisocyanate; cyclopentyl diisocyanates such as 1,2-cyclopentyl diisocyanate and 1,3-cyclopentyl diisocyanate; hydrogenated xylylene diisocyanate, hydrogenated toluene diisocyanate, hydrogenated diphenylmethane diisocyanate, hydrogenated tetramethylxylene diisocyanate, 4,4'-dicyclohexylmethane diisocyanate, and the like.

Specific examples of the aromatic polyisocyanates may include: 2,4-toluene diisocyanate, 2,6-toluene diisocyanate, 4,4'-diphenylmethane diisocyanate, 2,4'-diphenylmethane diisocyanate, 2,2'-diphenylmethane diisocyanate, 4,4'-diphenyl ether diisocyanate, 2-nitrobiphenyl-4,4'-diisocyanate, 2,2'-diphenylpropane-4,4'-diisocyanate, 3,3'-dimethyldiphenylmethane-4,4'-diisocyanate, 4,4'-diphenylpropane diisocyanate, m-phenyl diisocyanate, p-phenyl diisocyanate, naphthalene-1,4-diisocyanate, naphthalene-1,5-diisocyanate, 3,3' -dimethoxybiphenyl-4,4' -diisocyanate, xylylene-1,4-diisocyanate, xylylene-1,3-diisocyanate, and the like.

Preferred polyfunctional isocyanates may be, for example, polyfunctional isocyanates having an average of three or more isocyanate groups per molecule. The tri- or more functional isocyanates may be multimers (typically dimers or trimers), derivatives (such as products resulting from the addition reaction of polyols and two or more molecules of polyfunctional isocyanates), polymers, and the like of bifunctional or tri- or more functional isocyanates. Examples of the polyfunctional isocyanate may include polyfunctional isocyanates such as dimers or trimers of diphenylmethane diisocyanates, an isocyanurate form of hexamethylene diisocyanate (a trimer adduct with an isocyanurate structure), a reaction product of trimethylolpropane and toluene diisocyanate, a reaction product of trimethylolpropane and hexamethylene diisocyanate, polymethylene polyphenyl isocyanate, polyether polyisocyanate, and polyester polyisocyanate. The commercially available products of polyfunctional isocyanates may include, for example, "DURANATE TPA-100" (trade name, manufactured by Asahi Chemical Co., Ltd.), "CORONATE L" (trade name, manufactured by Nippon Polyurethane Industry Co. Ltd.), "CORONATE HL" (trade name, manufactured by Nippon Polyurethane Industry Co. Ltd.), "CORONATE HK" (trade name, manufactured by Nippon Polyurethane Industry Co. Ltd.), "CORONATE HX" (trade name, manufactured by Nippon Polyurethane Industry Co. Ltd.), "CORONATE2096" (trade name, manufactured by Nippon Polyurethane Industry Co. Ltd.), and the like.

In the embodiments involving the isocyanate-based crosslinking agent, the isocyanate group content (NCO content) in the isocyanate-based crosslinking agent is preferably from 7% to 15%, and the isocyanate functionality is 3.

The amount of the isocyanate-based crosslinking agent is not particularly limited. For example, it is preferably from 1 to 5 parts by weight, preferably from 2 to 4 parts by weight based on 100 parts by weight of the base polymer.

Examples of the melamine-based crosslinking agents may include: hexamethylolmelamine, butylated melamine resins (such as "SUPER BECKAMINE J-820-60N" (trade name, available from the DIC Corporation)), and the like.

Examples of the aziridine-based crosslinking agents may include: trimethylolpropane tris[3-(1-aziridinyl)propionate] and trimethylolpropane tris[3-(1-(2-methyl)aziridinyl propionate)]. As aziridine-based crosslinking agents, commercially available products may be used. For example, the Chemitite series such as Chemitite PZ-33 and Chemitite DZ-22E (manufactured by Nippon Shokubai Co., Ltd.) and the like may be used.

Examples of the metal chelate-based crosslinking agents may include: aluminum chelate compounds, titanium chelate compounds, zinc chelate compounds, zirconium chelate compounds, iron chelate compounds, cobalt chelate compounds, nickel chelate compounds, tin chelate compounds, manganese chelate compounds, chromium chelate compounds, and the like.

The content of the crosslinking agent is from 1 to 5 parts by weight based on 100 parts by weight of the base polymer. By increasing the amount of the crosslinking agent, there is a tendency to obtain a higher cohesive force. In some embodiments, the amount of the crosslinking agent is preferably 3 parts by weight or more based on 100 parts by weight of the base polymer. On the other hand, from the standpoint of avoiding reduced viscosity caused by an excessive increase in the cohesive force, the amount of the crosslinking agent is preferably 5 parts by weight or less based on 100 parts by weight of the base polymer.

In order to carry out the above crosslinking reaction more efficiently, a crosslinking catalyst may also be used. As a crosslinking catalyst, it may be preferable to use, for example, tin-based catalysts (such as dioctyldilauryltin). The amount of the crosslinking catalyst is not particularly limited, and is preferably from 0.0001 to 1 part by weight based on 100 parts by weight of the base polymer, for example.

In addition to the respective components described above, the adhesive composition of the present disclosure may contain various kinds of additives commonly used in the adhesive field, such as plasticizers, softeners, antistatic agents, anti-aging agents, and antioxidants, as necessary within a scope without impairing the effects of the present disclosure. Regarding the various kinds of additives, conventionally known additives may be used by conventional methods.

(Formation of Adhesive Layer)

The adhesive layer disclosed herein may be formed by a conventionally known method. For example, a method for forming an adhesive layer by directly applying (typically coating) the adhesive composition to the substrate layer and drying the same (direct method) may be adopted. In addition, a method for forming an adhesive layer on a surface with releasability (release surface) by applying the adhesive composition to this surface and drying the same, and transferring this adhesive layer onto the substrate layer (transfer method) may also be adopted. From the standpoint of productivity, the transfer method is preferred. As the above release surface, the surface of the release liner or the rear surface of the substrate layer that has been subjected to the peeling treatment or the like may be used. Of note, the adhesive layer disclosed herein is typically formed continuously, but it is not limited to such a form and it may also be an adhesive layer formed in a regular or irregular pattern such as a dot or strip shape.

The adhesive composition may be coated with a conventionally known coater such as a gravure roll coater, a die coater, or a bar coater. Alternatively, the adhesive composition may be coated by infiltration or curtain coating or the like.

From the standpoints of promoting the crosslinking reaction, improving the production efficiency and the like, the adhesive composition is preferably dried under heating. The drying temperature may be set, for example, to about 40°C to about 150°C, and is preferably set to about 60°C to about 130°C in general. After the adhesive composition is dried, it may be further aged for the purposes of regulating the migration of the components within the adhesive layer, carrying out the crosslinking reaction, relaxing the strain possibly existing in the substrate film or adhesive layer, etc.

The thickness of the adhesive layer is not particularly limited. Considering the balance between the adhesiveness to the adherend and the cohesiveness, the thickness of the adhesive layer is preferably from 5 to 30 $\mu$m, more preferably from 8 to 20 $\mu$m. By setting the thickness of the adhesive layer within the above range, good adhesiveness may be achieved.

[Release Film]

The adhesive sheet of the present disclosure may further comprise a release film as necessary. At least one surface of the release film is a release surface, which may be provided for protecting the adhesive layer of the present disclosure. As shown in FIG. 2, the adhesive sheet of the present disclosure comprises a release film and this release film is disposed on the side of the adhesive layer opposite to the substrate layer.

The release film includes a single-layer structure or a multi-layer structure and is formed of materials commonly used in this technical field. For example, the release film is a sheet comprising a substrate film and a release agent layer formed on one side thereof, and is a sheet peeled to expose each of the surfaces of the adhesive layer before the adhesive sheet of the present disclosure is used.

The substrate film of the release film may be composed of any suitable material(s), and for example, may be selected from the group consisting of a poly(ether ether ketone) film, a polyetherimide film, a polyarylate film, a polyethylene naphthalate film, a polyethylene film, a polypropylene film, a polybutene film, a polybutadiene film, a polymethylpentene film, a polyvinyl chloride film, a polyvinyl chloride copolymer film, a polyethylene terephthalate film, a polybutylene terephthalate film, a polyurethane film, an ethylene-vinyl acetate copolymer film, an ionomer resin film, an ethylene-(meth)acrylic acid copolymer film, an ethylene-(meth)acrylate copolymer film, a polystyrene film, and a polycarbonate film.

The release agent layer may be a layer obtained by selecting a suitable release agent from conventional ones such as fluorinated silicone resin-based release agents, fluororesin-based release agents, silicone resin-based release agents, polyvinyl alcohol resins, polypropylene resins, and long-chain alkyl compounds according to the base polymer of the adhesive layer, and by including the selected release agent in this base polymer.

[Release Liner]

In the present disclosure, the release liner may be used in the formation of the adhesive layer, the preparation of the adhesive sheet, and the storage, circulation, shape processing and the like of the adhesive sheet prior to use. The release liner is not particularly limited, and may be, for example, a release liner having a release treatment layer on the surface of the liner substrate such as a resin film or paper; a release liner made of a low adhesive material such as a fluoropolymer (polytetrafluoroethylene, etc.) or a polyolefin-based resin (polyethylene, polypropylene, etc.), or the like. The above-mentioned release liner may be formed, for example, by subjecting the above liner substrate to surface treatment with a release treatment agent such as a silicone-based release treatment agent, a long-chain alkyl-based release treatment agent, a fluorine-based release treatment agent, or molybdenum sulfide.

<Production Method for Adhesive Sheet>

The adhesive sheet of the present disclosure may be produced by any suitable method. For example, the following methods may be used: a method for coating an adhesive composition on a substrate layer, or a method for transferring a coating layer formed by coating an adhesive composition on any suitable substrate onto a substrate layer, etc.

<Use of Adhesive Sheet>

The adhesive sheets disclosed herein may be, for example, adhered to various members or devices for use in shielding and protection, etc. For example, the adhesive sheets disclosed herein may be used for masking paint during paint spraying of products such as automobiles, ships, trains, cabs, and furniture, for masking coating, and for upholstery.

**Examples**

Hereinafter, the present disclosure is described in detail with reference to the examples, but the present disclosure is not limited to these examples. The evaluation methods mentioned in the examples are as follows. Additionally, unless otherwise stated, the "part (s)" and "%" used in the examples are on a weight basis. Where the specific conditions are not specified in the examples, conventional conditions or the conditions recommended by manufacturers are followed. Unless otherwise specified, the materials or instruments are all conventional products that are commercially available.

(Preparation of Base Polymer A1)

To a reaction vessel equipped with a stirrer, a thermometer, a nitrogen inlet tube and a reflux condenser, 90.0 parts of n-butyl acrylate (BA) (manufactured by Zhejiang Satellite Holdings Co., Ltd.), 7.0 parts of vinyl acetate (VAc), 2.9 parts of acrylic acid (AA), 0.1 parts of 2-hydroxyethyl acrylate (HEA), and 120 parts of ethyl acetate as a polymerization solvent were charged and stirred at 65°C for 1.5 h under a nitrogen atmosphere, and then 0.1 part of 2,2'-azobisisobutyronitrile (AIBN) was charged as a thermal polymerization initiator and reacted at 65°C for 6h to 8 h to obtain a solution of the base polymer A1.

(Preparation of Base Polymers A2 to A5)

Base polymers A2 to A5 were prepared in the same manner as base polymer A1 except that the types and amounts of monomer components were changed as shown in Table 1.

Table 1 (Unit: Part)

| Base Polymer | | A1 | A2 | A3 | A4 |
|---|---|---|---|---|---|
| Viscous monomer | n-Butyl acrylate (BA) | 90.0 | 90.0 | 90.0 | 30.0 |
| | 2-Ethylhexyl acrylate (2-EHA) | | | | 67.0 |
| Polar monomer | Acrylonitrile (AN) | | | 7.0 | |
| | Vinyl acetate (VAc) | 7.0 | 5.0 | | |
| Copolymerizable monomer | Acrylic acid (AA) | 2.9 | 4.9 | 2.9 | 2.9 |
| | 4-Hydroxybutyl acrylate (HBA) | | 0.1 | | 0.1 |
| | 2-Hydroxyethyl acrylate (HEA) | 0.1 | | 0.1 | |

(Preparation of Adhesive Sheet)

Example 1

To the solution of base polymer A1 described above, with respect to 100 parts of the base polymer A1 contained in this solution, 10.0 parts of low softening point tackifying resin (MGDR, softening point: 10°C), 20.0 parts of moderate softening point tackifying resins (PEDR-105, softening point: 105°C; PEDR-120, softening point: 120°C, 10.0 parts for each), 10.0 parts of high softening point tackifying resin (PR12603N, softening point: 135°C), 2.0 parts of isocyanate crosslinking agent (trade name: CORONATE L, manufactured by Nippon Polyurethane Industry Co. Ltd.), and 0.1 parts of epoxy-based crosslinking agent (trade name: TETRAD C, manufactured by Mitsubishi Gas Chemical Company Inc.) were added and mixed homogeneously to prepare an adhesive composition C1.

The adhesive composition C1 was coated on one surface of a PTFE film with the thickness of 50 $\mu$m as a substrate layer, and heated at 130°C for 2 min to form an adhesive layer with a thickness of 10 $\mu$m, thereby obtaining an adhesive sheet. The evaluation results were shown in Table 2.

Examples 2 to 4 and Comparative Examples 1 to 3

Adhesive sheets were obtained in the same manner as in Example 1, with the exception of changing the type of the base polymer, the type and amount of the tackifying resin, and the amount of the crosslinking agent as shown in Table 2. The evaluation results were shown in Table 2.

Table 2 (Unit: Part)

| | | | Ex. 1 | Ex. 2 | Ex. 3 | Ex. 4 | Comp. Ex. 1 | Comp. Ex. 2 | Comp. Ex. 3 |
|---|---|---|---|---|---|---|---|---|---|
| | | Substrate | PTFE | PTFE | PTFE | PTFE | PTFE | PTFE | PTFE |
| Adhesive Layer | Tackifying Resin | Base polymer (part) | A1 (100) | A2 (100) | A2 (100) | A3 (100) | A5 (100) | A1 (100) | A1 (100) |
| | | Low softening point tackifying resin (MGDR) | 10.0 | 4.0 | 9.0 | 15.0 | | 10.0 | 40.0 |
| | | Moderate softening point tackifying resin (PEDR-105) | 10.0 | 10.0 | 10.0 | 15.0 | | | |
| | | Moderate softening point | 10.0 | 15.0 | 10.0 | 15.0 | | 20.0 | |

| | | | | | | | | |
|---|---|---|---|---|---|---|---|---|
| | tackifying resin (PEDR-120) | | | | | | | |
| | High softening point tackifying resin (PR12603N) | 10.0 | 12.0 | 8.0 | | 40.0 | 10.0 | |
| Crosslinking Agent | CORONATE L | 2.0 | 3.0 | 3.0 | 2.0 | 2.0 | 1.0 | 3.0 |
| | TETRAD C | 0.1 | 0.1 | 0.15 | 0.2 | 0.2 | | 0.1 |
| Adhesive layer Ra (μm) | | 0.8 | 0.5 | 0.5 | 0.3 | 0.1 | 0.1 | 0.4 |
| Adhesive layer Rz (μm) | | 7.2 | 4.1 | 4.3 | 2.9 | 0.2 | 0.2 | 1.6 |
| Adhesive layer Rz/Ra | | 9.0 | 8.2 | 8.6 | 9.7 | 2.0 | 2.0 | 4.0 |
| Substrate layer Ra (μm) | | 0.9 | 0.5 | 0.5 | 0.3 | 0.1 | 0.1 | 0.4 |
| Substrate layer Rz (μm) | | 8.4 | 7.9 | 7.9 | 3.4 | 0.2 | 0.2 | 1.6 |
| Substrate layer Rz/Ra | | 9.3 | 15.8 | 15.8 | 11.3 | 2.0 | 2.0 | 4.0 |
| Separation of alignment bonding region (mm) | | 45 | 10 | 8 | 50 | >80 | >80 | >80 |
| Weight-average molecular weight of soluble portion of adhesive layer (Mw × 10⁴) | | 8.0 | 6.2 | 5.7 | 4.5 | 11.0 | 8.0 | 9.0 |
| Gel rate of adhesive layer (%) | | 59.3 | 61.4 | 64.2 | 67.1 | 40.0 | 30.0 | 45.0 |
| Adhesive sheet adhered to SUS403 plate (23°C×50RH%×0.5H) (N) | | 0.3 | 1.1 | 0.8 | 1.8 | 0.1 | 10.2 | 9.5 |
| Adhesive sheet adhered to SUS403 plate (23°C×50RH%×24H) (N) | | 7.3 | 10.9 | 8.5 | 9.1 | 2.4 | 11.4 | 9.7 |
| Storage modulus (G') of adhesive layer (0°C × 1 Hz) (10⁴ Pa) | | 136.6 | 146.1 | 154.2 | 165.3 | 456.4 | 54.5 | 32.4 |
| Loss modulus (G") of adhesive layer (0°C × 1 Hz) (10⁴ Pa) | | 217.7 | 234.1 | 247.8 | 263.8 | 602.3 | 67.8 | 38.5 |
| Storage modulus (G') of adhesive layer (23°C × 1Hz) (10⁴ Pa) | | 10.8 | 13.1 | 15.0 | 16.7 | 39.7 | 5.2 | 3.1 |
| Loss modulus (G") of adhesive layer (23°C × 1 Hz) (10⁴ Pa) | | 7.6 | 8.9 | 10.1 | 12.2 | 35.6 | 4.4 | 2.6 |
| Fixed load (RT × 400 g) | | ○ | ◎ | ◎ | ○ | × | × | × |
| Adhesive residue property | | ○ | ○ | ○ | ○ | ○ | × | × |

| Flatness | ○ | ○ | ○ | ○ | × | × | × |
|---|---|---|---|---|---|---|---|
| Reworkability | ◎ | ◎ | ◎ | ○ | × | × | × |
| Comprehensive evaluation | ○ | ◎ | ◎ | ○ | × | × | × |

<Evaluation of Tests>

(1) Ra and Rz

Both Ra and Rz were measured with reference to the test method of JIS-B0601-1994.

(2) Gel rate

Approximately 0.1 g of an adhesive sample (weight: Wg1) formed from the adhesive composition was wrapped into a drawstring-bag shape with a porous polytetrafluoroethylene film (weight: Wg2) having an average pore diameter of 0.2 $\mu$m, and the mouth was fastened tightly with a kite string (weight: Wg3). The bag was dipped in 50 mL of ethyl acetate and kept at room temperature (typically 23°C) for 7 days. Thereafter, the above bag was taken out and the ethyl acetate attached to the outer surface of the bag was wiped off. The bag was dried at 130°C for 2 h. The weight (Wg4) of the bag was measured. The gel rate was determined by substituting each of the values into the equation below.

$$\text{Gel rate (\%)} = [(Wg4 - Wg2 - Wg3) / Wg1] \times 100$$

(3) Adhesive force

The adhesive sheets prepared in all of the Examples and Comparative Examples were cut into a size of 20 mm wide by 150 mm long as test pieces. An SUS plate (SUS430BA plate) cleaned with toluene was used as an adherend. Under the standard environment of 23°C and 50%RH, the release liner covering the adhesive surface of each of the test pieces was peeled off, and the exposed adhesive surface was press-bonded onto the adherend by reciprocating 2-kg roller once. After being left under the above standard environment for 0.5 h and 24 h respectively, the test pieces thereby press-bonded onto the adherends were peeled off at a tensile speed of 300 mm/min and a peel angle of 180°C by using a universal testing machine (manufactured by the Shimadzu Corporation, product name: "AG-X plus electronic universal testing machine") in accordance with JIS Z 0237, and the forces (180° peel adhesive forces) (N) required for such peeling were determined.

(4) Separation of the alignment bonding region

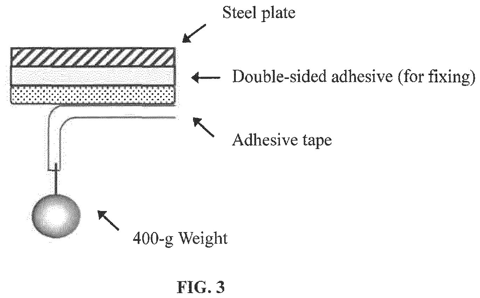

As shown in FIG. 3, a commercially available double-sided adhesive was used, and one side thereof was bonded to an SUS plate (SUS430BA plate) cleaned with toluene as an adherend. One of the adhesive sheets was bonded to the side of the double-sided adhesive opposite to the SUS plate. The other adhesive sheet was cut out. The above two adhesive sheets were subjected to alignment bonding at the side of the adhesive layer with a bonding area of 20 mm × 100 mm. The bonded surface was shown as the adhesive surface in FIG. 3. The other adhesive sheet was hanged with 400 g of weight at one side and left at 23°C × 50RH% for 24 h to measure the separation of the alignment bonding region.

(5) Storage modulus and loss modulus

The adhesive compositions of the Examples and Comparative Examples were used to prepare adhesive layers (thickness: 50 $\mu$m) for measurement, respectively. Then, the adhesive layers were punched to have a diameter of 7.9 mm and fixed in such a manner that the adhesive layer was sandwiched between parallel plates. The samples thereby obtained were used as test samples. The above test samples were subjected to the dynamic viscoelasticity measurement under the following conditions by using a dynamic viscoelasticity measurement device (manufactured by the Rheometric Corporation, product name: "ARES") to determine the storage modulus and loss modulus at 0°C and 23°C.

Measurement mode: shear mode

Temperature range: -70°C to 150°C
Heating rate: 5°C/min
Measuring frequency: 1 Hz

(6) Fixed load (RT × 400 g)

The fixed load was evaluated according to the separation of the alignment bonding region in item (4) described above. The evaluation of the fixed load was ⊚ when the separation of the alignment bonding region was less than 40 mm; the evaluation of the fixed load was O when the separation was from 40 to 80 mm; and the evaluation of the fixed load was × when the separation was 80 mm or more.

(7) Adhesive residue property

The adhesive sheets obtained in the above Examples and Comparative Examples were adhered to stainless steel plates (SUS430BA plates) with a covering area of 200 mm × 200 mm, left at 140°C for 2 min, and cooled to room temperature. Thereafter, the adhesive sheets were manually peeled off and evaluated based on the following criteria:

○: without adhesive residues
×: with adhesive residues

(8) Flatness

The adhesive sheets obtained in the above Examples and Comparative Examples were adhered to stainless steel plates (SUS430BA plates) using a 2-Kg roller with the covering area of 50 mm × 100 mm. The flatness was O if the adhesive sheets were adhered without wrinkles and bubbles; and the flatness was × if with bubbles or wrinkles.

(9) Reworkability

The adhesive sheets obtained in the above Examples and Comparative Examples were adhered to stainless steel plates (SUS430BA plates) using a 2-Kg roller with the covering area of 50 mm × 100 mm. The reworkability was ⊚ if the adhesive sheets were able to be removed smoothly within 2 h after adhering, there were no obvious changes in the appearances of the adhesive tapes and adherend, and the adhesive tapes might be adhered again. The reworkability was O if the adhesive sheets were able to be removed smoothly within 1 h after adhering, there were no obvious changes in the appearances of the adhesive tapes and adherend, and the adhesive tapes might be adhered again. The reworkability was × if the adhesive sheets were not able to be removed smoothly or there were obvious changes in the appearances or the adhesive tapes might not be adhered again.

As could be seen from Table 2, the adhesive sheets of Examples 1 to 4 had excellent adhesiveness, flatness, and reusability (reworkability) and were easily peelable after use. In Comparative Examples 1 to 3, however, if the surface roughness of the adhesive sheets was not within the scope of the present disclosure or the adhesive sheets did not meet the other conditions specified herein, the adhesive sheets might not have good adhesiveness, flatness, or reusability (reworkability) and might not be easily peeled off after use.

## Claims

1. An adhesive sheet, comprising a substrate layer and an adhesive layer disposed on at least one surface of the substrate layer, wherein the adhesive layer has surface roughness as follows: Ra is from 0.2 to 1.5 μm, preferably from 0.4 to 1.0 μm; Rz is from 2.0 to 15.0 μm, preferably from 3.0 to 10.0 μm; and Rz/Ra is from 3.0 to 30.0, preferably from 5.0 to 20.0.

2. The adhesive sheet according to claim 1, wherein at least one surface of the substrate layer has the surface roughness as follows: Ra is from 0.2 to 1.5 μm, preferably from 0.4 to 1.0 μm; Rz is from 2.0 to 15.0 μm, preferably from 3.0 to 10.0 μm; and Rz/Ra is from 3.0 to 30.0, preferably from 5.0 to 20.0.

3. The adhesive sheet according to claim 1 or 2, wherein the adhesive sheet further comprises a release film, the release film is provided at least on a side of the adhesive layer opposite to the substrate layer, and the release film has the surface roughness as follows: Ra is from 0.2 to 1.5 μm, preferably from 0.4 to 1.0 μm; Rz is from 2.0 to 15.0 μm, preferably from 3.0 to 10.0 μm; and Rz/Ra is from 3.0 to 30.0, preferably from 5.0 to 20.0.

4. The adhesive sheet according to claim 1 or 2, wherein a 180° peel adhesive force to a stainless steel plate, measured when the adhesive sheet is adhered to the stainless steel plate and left at 23°C × 50RH% for 0.5 h, is from 0.1 N to 5 N.

5. The adhesive sheet according to claim 1 or 2, wherein a 180° peel adhesive force to a stainless steel plate, measured when the adhesive sheet is adhered to the stainless steel plate and left at 23°C × 50RH% for 24 h, is from 5 N to 12 N.

6. The adhesive sheet according to claim 1 or 2, wherein two pieces of the adhesive sheet are cut out and subjected to alignment bonding at the side of the adhesive layer with a bonding area of 20 mm × 100 mm, either of the two pieces of the adhesive sheet is hanged with 400 g of a weight at one side and left at 23°C × 50RH% for 24 h, and the alignment bonding region has a separation of 80 mm or less.

7. The adhesive sheet according to claim 1 or 2, wherein a soluble portion of the adhesive layer has a weight-average molecular weight of 100,000 or less, preferably 80,000 or less, more preferably 50,000 or less.

8. The adhesive sheet according to claim 1 or 2, wherein the adhesive layer has a gel rate of 45% to 70%.

9. The adhesive sheet according to claim 1 or 2, wherein the adhesive layer has, at 0°C, a storage modulus (G') of $80.0×10^4$ Pa to $300.0×10^4$ Pa, preferably $120.0×10^4$ Pa to $250.0×10^4$ Pa; and a loss modulus (G") of $120.0×10^4$ Pa to $450.0×10^4$ Pa, preferably $200.0×10^4$ Pa to $350×10^4$ Pa.

10. The adhesive sheet according to claim 1 or 2, wherein the adhesive layer has, at 23°C, a storage modulus (G') of $8.5×10^4$ Pa to $20×10^4$ Pa, preferably $9.0×10^4$ Pa to $15.0×10^4$ Pa; and a loss modulus (G") of $5.0×10^4$ Pa to $13.0×10^4$ Pa, preferably $6.0×10^4$ Pa to $11.0×10^4$ Pa.

11. The adhesive sheet according to claim 1 or 2, wherein the adhesive layer is formed from an adhesive composition comprising: a base polymer, a tackifying resin, and a crosslinking agent;
preferably, the content of the tackifying resin is from 30 to 50 parts by weight with respect to 100 parts by weight of the base polymer; and the content of the crosslinking agent is from 1 to 5 parts by weight with respect to 100 parts by weight of the base polymer.

12. The adhesive sheet according to claim 11, wherein based on 100 parts by weight of all monomer components of the base polymer, the base polymer comprises: 70 to 95 parts by weight, preferably 80 to 90 parts by weight of a viscous monomer; 5 to 30 parts by weight, preferably 10 to 20 parts by weight of a polar monomer; and 1 to 5 parts by weight, preferably 2 to 4 parts by weight of a copolymerizable monomer,
preferably, the viscous monomer is at least one selected from the group consisting of alkyl (meth)acrylates having an alkyl group with 4 to 20 carbon atoms; the polar monomer is at least one selected from the group consisting of acrylonitrile, methyl methacrylate, vinyl acetate, and styrene; and the copolymerizable monomer is at least one selected from the group consisting of hydroxyl-containing monomers, carboxyl-containing monomers, sulfonyl-containing monomers, phosphate group-containing monomers, epoxy group-containing monomers, isocyanate group-containing monomers, amide group-containing monomers, monomers having a nitrogen atom-containing ring, monomers having a succinimide skeleton, maleimides, itaconimides, aminoalkyl (meth)acrylates, alkoxyalkyl (meth)acrylates, vinyl ethers, and olefins.

13. The adhesive sheet according to claim 11, wherein the tackifying resin is at least one selected from the group consisting of a phenol-based tackifying resin, a terpene-based tackifying resin, a modified terpene-based tackifying resin, a rosin-based tackifying resin, and a hydrocarbon-based tackifying resin;

preferably, the tackifying resin contains a tackifying resin having a hydroxyl value of 70 to 110 mg KOH/g;
more preferably, the tackifying resin is a combination of a low softening point tackifying resin with at least one selected from the group consisting of a moderate softening point tackifying resin and a high softening point tackifying resin, the low softening point tackifying resin has a softening point of 5°C to 70°C, the moderate softening point tackifying resin has a softening point of higher than 70°C and lower than 130°C, and the high softening point tackifying resin has a softening point of 130°C to 170°C.

$\dfrac{1}{\downarrow}$

20

10

**FIG. 1**

$\dfrac{1}{\downarrow}$

20

10

30

**FIG. 2**

Steel plate

Double-sided adhesive (for fixing)

Adhesive tape

400-g Weight

FIG. 3

## INTERNATIONAL SEARCH REPORT

International application No.

**PCT/CN2022/082165**

**A.    CLASSIFICATION OF SUBJECT MATTER**

C09J 7/30(2018.01)i;   C09J 7/00(2018.01)i;   C09J 133/08(2006.01)i

According to International Patent Classification (IPC) or to both national classification and IPC

**B.    FIELDS SEARCHED**

Minimum documentation searched (classification system followed by classification symbols)

C09J

Documentation searched other than minimum documentation to the extent that such documents are included in the fields searched

Electronic data base consulted during the international search (name of data base and, where practicable, search terms used)

CNKI, CNPAT, WPI, EPODOC, WOTXT, USTXT, EPTXT, JPTXT: 粘合层, 粘接层, 粘合面, 粘接面, 粗糙度Ra, 粗糙度Rz, 剥离, 粘合力, 粘接力, 黏合力, 黏结力, 凝胶率, 凝胶分数, 储能模量, 损耗模量, 增粘树脂, 增黏树脂, 交联剂, 丙烯酸烷基酯, 丙烯酸正丁酯, 丙烯酸丁酯, 丙烯酸+乙基己酯, 丙烯腈, 醋酸乙烯酯, 乙酸乙烯酯, 丙烯酸, 丙烯酸羟乙酯, 丙烯酸羟基乙酯, 丙烯酸羟基丁酯, 丙烯酸羟丁酯, 软化点, adhesive, sheet?, layer?, surface, roughness, Ra, Rz, peel, adhesion, force, strength, gel+ fraction, storage modulus, loss modulus, tackifying resin?, crosslink+, alkyl acrylate?, butyl acrylate?, BA, ethylhexyl acrylate?, EHA, acrylonitrile, AN, vinyl acetate, VAc, acrylic acid, AA, hydroxyethyl acrylate, HEA, hydroxybutyl acrylate, HBA, soften point

**C.    DOCUMENTS CONSIDERED TO BE RELEVANT**

| Category* | Citation of document, with indication, where appropriate, of the relevant passages | Relevant to claim No. |
|---|---|---|
| PX | CN 113943541 A (NITTO DENKO SHANGHAI SONGJIANG CO., LTD.) 18 January 2022 (2022-01-18) description, paragraphs [0008]-[0207] | 1-13 |
| X | JP 2016151006 A (DAINIPPON INK & CHEMICALS) 22 August 2016 (2016-08-22) description, table 1, and embodiments 1-10 | 1, 8 |
| X | CN 106715628 A (NITTO DENKO CORP.) 24 May 2017 (2017-05-24) description, paragraphs [0013]-[0224] | 1-13 |
| X | CN 105602463 A (NITTO DENKO CORP.) 25 May 2016 (2016-05-25) description, paragraphs [0036]-[0180], table 1 | 1-13 |
| X | CN 106916541 A (NITTO DENKO CORP.) 04 July 2017 (2017-07-04) description, paragraphs [0016]-[0230] | 1-13 |

☑ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **17 June 2022** | **01 July 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/082165**

## C. DOCUMENTS CONSIDERED TO BE RELEVANT

| Category* | Citation of document, with indication, where appropriate, of the relevant passages | Relevant to claim No. |
|---|---|---|
| X | WO 2020129355 A1 (DAINIPPON INK & CHEMICALS) 25 June 2020 (2020-06-25) description, paragraphs [0012]-[0305] | 1-13 |
| X | CN 106574154 A (NITTO DENKO CORP.) 19 April 2017 (2017-04-19) description, paragraphs [0011]-[0215] | 1-13 |
| X | CN 102268230 A (NITTO DENKO CORP.) 07 December 2011 (2011-12-07) description, paragraphs [0014]-[0211] | 1-13 |
| X | CN 106574149 A (NITTO DENKO CORP.) 19 April 2017 (2017-04-19) description, paragraphs [0011]-[0238] | 1-13 |
| X | CN 103849332 A (SOKEN CHEMICAL & ENGINEERING CO., LTD.) 11 June 2014 (2014-06-11) description, paragraphs [0017]-[0283] | 1-13 |
| A | JP 2012025813 A (DAINIPPON INK & CHEMICALS) 09 February 2012 (2012-02-09) entire document | 1-13 |

Form PCT/ISA/210 (second sheet) (January 2015)

## INTERNATIONAL SEARCH REPORT
### Information on patent family members

International application No.

**PCT/CN2022/082165**

| Patent document cited in search report | | | Publication date (day/month/year) | Patent family member(s) | | | Publication date (day/month/year) |
|---|---|---|---|---|---|---|---|
| CN | 113943541 | A | 18 January 2022 | None | | | |
| JP | 2016151006 | A | 22 August 2016 | None | | | |
| CN | 106715628 | A | 24 May 2017 | TW | 201708332 | A | 01 March 2017 |
| | | | | JP | 2018087340 | A | 07 June 2018 |
| | | | | JP | 2017002292 | A | 05 January 2017 |
| | | | | KR | 20180020118 | A | 27 February 2018 |
| CN | 105602463 | A | 25 May 2016 | EP | 3023469 | A1 | 25 May 2016 |
| | | | | US | 2016137884 | A1 | 19 May 2016 |
| CN | 106916541 | A | 04 July 2017 | KR | 20170034321 | A | 28 March 2017 |
| | | | | JP | 2017057375 | A | 23 March 2017 |
| WO | 2020129355 | A1 | 25 June 2020 | CN | 113166601 | A | 23 July 2021 |
| | | | | JP | 6566110 | B1 | 28 August 2019 |
| CN | 106574154 | A | 19 April 2017 | US | 2017232720 | A1 | 17 August 2017 |
| | | | | JP | 2016037564 | A | 22 March 2016 |
| | | | | EP | 3178893 | A1 | 14 June 2017 |
| | | | | KR | 20170041803 | A | 17 April 2017 |
| | | | | WO | 2016021373 | A1 | 11 February 2016 |
| CN | 102268230 | A | 07 December 2011 | KR | 20110132531 | A | 08 December 2011 |
| | | | | EP | 2404972 | A2 | 11 January 2012 |
| | | | | TW | 201207068 | A | 16 February 2012 |
| | | | | JP | 2011252095 | A | 15 December 2011 |
| | | | | US | 2011300361 | A1 | 08 December 2011 |
| CN | 106574149 | A | 19 April 2017 | KR | 20170036696 | A | 03 April 2017 |
| | | | | US | 2017158918 | A1 | 08 June 2017 |
| | | | | JP | 2016029155 | A | 03 March 2016 |
| | | | | WO | 2016013442 | A1 | 28 January 2016 |
| CN | 103849332 | A | 11 June 2014 | JP | 2014108968 | A | 12 June 2014 |
| | | | | KR | 20140070374 | A | 10 June 2014 |
| | | | | TW | 201420708 | A | 01 June 2014 |
| JP | 2012025813 | A | 09 February 2012 | None | | | |

Form PCT/ISA/210 (patent family annex) (January 2015)